# DEMANDE DE BREVET EUROPEEN

(11) **EP 1 433 634 A1**
(43) Date de publication de la demande: **30.06.2004**
(21) Numéro de dépôt: 03364042.6
(22) Date de dépôt: 23.12.2003
(51) Int. Cl.: B60J 1/20, B60J 7/00, B60J 3/02, B60J 11/00

(54) **Dispositif d'occultation pour véhicule automobile. ancluant un support d'enroulement de section non circulaire et véhicule correspondant**

(30) Priorité: 24.12.2002 FR 0216670
(71) Demandeur: WAGON AUTOMOTIVE SNC, 79302 Bressuire Cédex (FR)
(72) Inventeur: Cousson, Francois, 79430 La Chapelle Saint Laurent (FR)
(74) Mandataire: Bioret, Ludovic

(57) **Abrégé**

L'invention a pour objet un dispositif d'occultation pour véhicule, mettant en oeuvre une toile (1) mobile entre une position repliée, dans laquelle elle est au moins en partie enroulée sur un support d'enroulement, et au moins une position déployée, ledit support d'enroulement présentant une section non circulaire, sa surface étant définie de façon à optimiser le volume de ladite toile (1) repliée, en fonction d'au moins une contrainte imposée par ledit véhicule.

## Description

Le domaine de l'invention est celui des dispositifs d'occultation pour véhicule, par exemple pour une baie et/ou une ouverture ménagée dans le pavillon d'un véhicule. Plus précisément, l'invention concerne notamment les stores à enrouleur, du type mettant en oeuvre une toile d'occultation mobile entre une position repliée et une position déployée, en particulier, mais non exclusivement, pour un pavillon de véhicule.

De façon assez répandue, les pavillons des véhicules automobiles sont pourvus d'une baie et/ou d'une ouverture vitrée.

Une tendance actuelle est de proposer des véhicules automobiles présentant de plus en plus de surfaces vitrées. On cherche donc à augmenter tant que faire se peut la surface vitrée des portes latérales, des pare-brise et des lunettes arrières, et également des pavillons.

Les objectifs de cette tendance sont notamment d'offrir :
- une meilleure visibilité pour les occupants du véhicule ;
- une luminosité accrue à l'intérieur du véhicule ;
- une sensation d'espace élargi pour les occupants ;
- une amélioration esthétique générale du véhicule ;
- ...

On comprend aisément qu'il est nécessaire de prévoir des moyens d'occultation, pour protéger l'habitacle et ses occupants du soleil. Diverses solutions ont été proposées pour limiter le passage des rayons du soleil, notamment en utilisant des vitres teintées ou en rapportant un motif filtrant sur la vitre par sérigraphie.

On propose également souvent un ou plusieurs stores. Les stores à enrouleur connus, comprenant une toile mobile entre une position déployée et une position repliée, du type de ceux utilisés pour les pare-brises, les vitres latérales ou les lunettes arrières, ont ainsi été adaptés et/ou perfectionnés en vue d'être mis en oeuvre en regard de pavillons vitrés.

Or, de tels pavillons vitrés peuvent présenter des dimensions importantes. La toile d'occultation de ces pavillons est donc dimensionnée en conséquence.

Classiquement, en position repliée, la toile du store est enroulée sur un tube d'enroulement. On obtient donc un enroulement essentiellement cylindrique dont le diamètre augmente au fur et à mesure du repliement de la toile.

Ainsi, plus la longueur du pavillon est importante, plus celle de la toile l'est également et plus l'épaisseur de l'enroulement de la toile (complètement repliée) est importante.

En outre, pour améliorer le pouvoir occultant de la toile, on utilise pour celle-ci des tissus épais, voire dans certains cas des tissus complexes tri-couches. Bien évidemment, le recours à de tels tissus augmente encore le diamètre de l'enroulement de la toile complètement repliée. Ce diamètre est encore augmenté dans le cas où la toile est munie de baleine visant à la rigidifier, lorsqu'elle est déployée.

On comprend donc qu'il est nécessaire de prévoir un volume, parfois conséquent, pour loger un tel enroulement de toile, et que ce volume est assigné au store au détriment du volume de l'habitacle du véhicule.

Dans certains cas, la conception des véhicules est telle qu'il est pratiquement impossible de loger, au voisinage direct d'une baie vitrée, un store dont la toile en position repliée nécessite un espace relativement important.

Il est alors nécessaire de déporter le tube d'enroulement en une zone plus appropriée du véhicule, ce qui entraîne un allongement de la toile et, en conséquence une augmentation de l'encombrement de la toile en position enroulée, ce qui ramène au problème énoncé précédemment. Il est aussi possible de recourir à d'autres solutions de pliage de la toile, tel que le pliage en accordéon, qui s'avère cependant moins pratiques et plus coûteuses.

Quoiqu'il en soit, ces solutions engendrent d'autres problèmes, et rendent notamment complexes le montage et la maintenance d'un tel store.

L'invention a notamment pour objectif de pallier les inconvénients de l'art antérieur.

Plus précisément, l'invention a pour objectif de proposer un dispositif d'occultation mettant en oeuvre une toile mobile entre une position déployée et une position repliée qui permette de répartir le volume de la toile en position repliée en fonction des éventuelles contraintes imposées par le véhicule.

En ce sens, l'invention a notamment pour objectif de fournir un tel dispositif d'occultation dans lequel l'espace prévu pour loger la toile en position repliée est optimisée par rapport au véhicule et qui, par exemple ne pénalise pas la garde à la tête des occupants du véhicule.

L'invention a également pour objectif de fournir un tel dispositif d'occultation grâce auquel le volume assigné à l'enroulement de la toile peut aisément être adapté en fonction de l'espace disponible dans le véhicule et/ou en fonction de la conception de celui-ci.

L'invention a aussi pour objectif de fournir un tel dispositif d'occultation qui permette d'utiliser des tissus de toile très épais, voire des baleines, sans que le logement d'une telle toile soit problématique.

Un autre objectif de l'invention est de fournir un tel dispositif d'occultation qui soit simple de conception et facile à mettre en oeuvre.

Ces objectifs, ainsi que d'autres qui apparaîtront par la suite, sont atteints grâce à l'invention qui a pour objet un dispositif d'occultation pour véhicule, mettant en oeuvre une toile mobile entre une position repliée, dans laquelle elle est au moins en partie enroulée sur un support d'enroulement, et au moins une position déployée, ledit support d'enroulement présentant une section non circulaire, sa surface étant définie de façon à optimiser le volume de ladite toile repliée, en fonction d'au moins une contrainte imposée par ledit véhicule.

L'invention propose donc une solution nouvelle allant à l'encontre des a priori de l'homme du métier qui a toujours utilisé les tubes enrouleurs, par définition et de façon systématique cylindriques.

Comme cela va clairement apparaître par la suite, l'invention résout ainsi efficacement le problème du logement de l'enroulement d'une toile lorsque l'espace pour ce logement est réduit dans une dimension.

Selon une solution préférée, ledit support d'enroulement comprend une bande sans fin montée sur au moins deux rouleaux s'étendant perpendiculairement à l'axe de déploiement de ladite toile.

On obtient ainsi une solution particulièrement simple et efficace, le principe de la bande sans fin pouvant en outre être décliné selon différentes configurations en vue d'être adapté à un volume prédéterminé dans le véhicule.

Selon une solution avantageuse, un desdits rouleaux comprend des moyens d'entraînement de ladite bande sans fin, et en ce qu'au moins un autre desdits rouleaux est un rouleau fou.

Dans ce cas, selon un premier mode de réalisation, compatible avec le premier, lesdits moyens d'entraînement comprennent des moyens de rappel, tendant à ramener ladite toile dans sa position repliée.

Selon un deuxième mode de réalisation, lesdits moyens d'entraînement comprennent au moins un moteur.

Préférentiellement, ladite surface définie par ledit support d'enroulement est aplatie, par rapport à un cylindre, et s'étend sensiblement parallèlement au plan défini par ladite toile dans sa position déployée.

De cette façon, on peut réduire considérablement une des dimensions (par exemple la hauteur, dans le cas d'un store de pavillon) du support d'enroulement et par voie de conséquence de l'enroulement de la toile repliée.

Avantageusement, ladite toile est solidaire de ladite bande sans fin, la toile étant préférentiellement solidarisée à ladite bande sans fin par l'une au moins des techniques appartenant au groupe suivant :
- soudage ;
- collage ;
- agrafage.

Selon une première application avantageuse, le dispositif est destiné à occulter au moins une portion d'un pavillon vitré.

Selon d'autres applications avantageuses, le dispositif est destiné à occulter au moins une portion :
- d'un toit ouvrant ;
- d'une vitre de porte latérale ;
- d'une vitre de hayon ;
- d'un pare-brise;
- d'un coffre à bagages.

D'autres applications sont bien sûr envisageables, sans sortir du cadre de l'invention.

L'invention concerne également un véhicule comprenant au moins un dispositif d'occultation tel que décrit précédemment.

D'autres caractéristiques et avantages de l'invention apparaîtront plus clairement à la lecture de la description suivante d'un mode de réalisation préférentiel de l'invention, et de plusieurs de ses variantes, donnés à titre d'exemples illustratifs et non limitatifs, et des dessins annexés parmi lesquels :
- la figure 1 est une vue d'un enroulement d'une toile d'occultation sur un tube enrouleur cylindrique selon l'art antérieur ;
- la figure 2 est une vue en coupe d'un enroulement de toile sur un support d'enroulement d'un dispositif d'occultation selon l'invention ;
- les figures 3 à 5 sont des vues en coupe de différentes variantes des moyens d'enroulement d'un dispositif d'occultation selon l'invention.

Tel que mentionné précédemment, le principe de l'invention repose sur le fait de prévoir des moyens d'enroulement de la toile conçus de façon que l'encombrement de l'enroulement de la toile soit réparti de façon optimisée par rapport à l'espace de l'habitacle d'un véhicule.

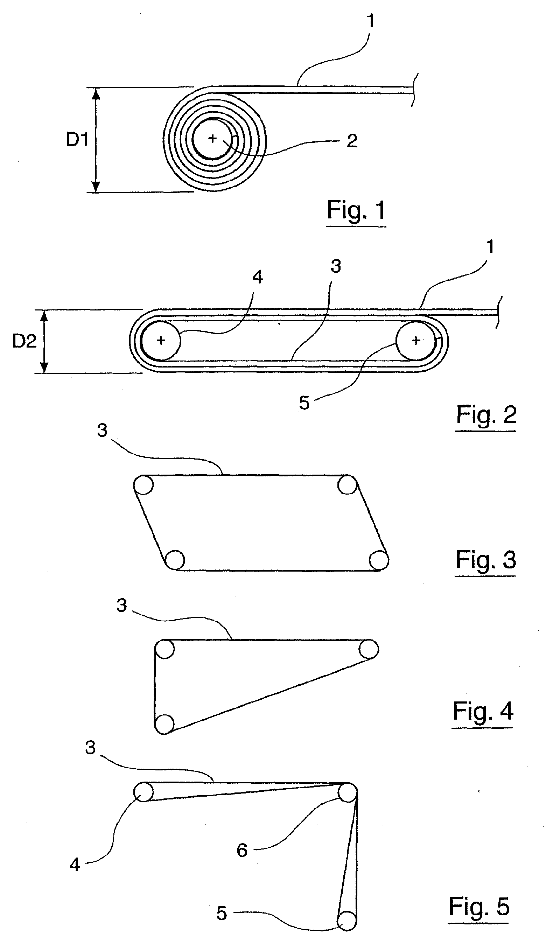

On rappelle que traditionnellement, en position repliée, la toile 1 d'un store d'occultation est enroulée sur un tube d'enroulement 2 sensiblement cylindrique tel que représenté de façon schématique sur la figure 1.

Lorsque la toile est complètement repliée, l'enroulement obtenu présente un diamètre D1 qui varie essentiellement en fonction du diamètre du tube d'enroulement lui-même, de la longueur de la toile en position déployée et, de l'épaisseur de la toile (et éventuellement des baleines).

La figure 2 illustre une toile enroulée sur des moyens d'enroulement d'un dispositif d'occultation selon l'invention.

Tel que cela apparaît clairement, l'enroulement de la toile peut être obtenu sur une épaisseur D2 notablement inférieure au diamètre D1 de la figure 1, ceci avec des paramètres comparables en termes de longueur de toile en position déployée, d'épaisseur de toile...

Selon le présent mode de réalisation, ce résultat est obtenu en prévoyant un support d'enroulement 3 sous forme d'une bande sans fin enroulée autour de deux rouleaux 4, 5 (s'étendant perpendiculairement à l'axe de déploiement de la toile 1) et tendue entre ceux-ci, une extrémité de la toile 1 étant solidarisée par collage (cette solidarisation pouvant de façon similaire être obtenue par soudage, par agrafage...) à la bande sans fin.

Plus précisément, ce résultat est obtenu ici grâce au support d'enroulement qui présente une surface aplatie (comparée à l'enroulement cylindrique de la figure 1), s'étendant sensiblement parallèlement au plan défini par la toile dans sa position déployée.

Un tel dispositif est particulièrement destiné à occulter un pavillon vitré, mais peut également être monté de façon à venir occulter un toit ouvrant, une vitre de porte latérale, une vitre de hayon, un pare-brise, ou encore un coffre à bagages, etc.

La bande sans fin 3 (et par conséquent la toile 1) est entraînée dans le sens du repliement de la toile par le rouleau 4 couplé à des moyens de rappel élastique qui tendent à ramener la toile dans sa position repliée.

Le rouleau 5 est quant à lui un rouleau fou, libre de tourner sur lui-même sous la seule action de la toile 1.

On note que d'autres modes de réalisation peuvent être envisagés sans sortir du cadre de l'invention, notamment en prévoyant de coupler l'un des rouleaux à des moyens d'entraînement motorisés.

Les figures 3 et 4 illustrent des variantes de réalisation du support d'enroulement d'un dispositif d'occultation selon l'invention.

En référence à la figure 3, ce support d'enroulement présente une section s'inscrivant essentiellement dans un parallélogramme (la bande sans fin 3 étant montée sur quatre rouleaux).

La figure 4 illustre une autre variante selon laquelle le support d'enroulement présente une section s'inscrivant essentiellement dans un triangle (la bande sans fin étant montée sur trois rouleaux).

On comprend donc qu'un tel support d'enroulement peut être conformé de multiples façons en fonction des contraintes imposées par le véhicule, de façon à définir une surface d'enroulement adapté.

Notamment, une autre configuration envisageable est illustrée par la figure 5 sur laquelle on a représenté une bande sans fin 3 (formant support d'enroulement de la toile) montée sur trois rouleaux, un rouleau 6 permettant de dévier la bande sans fin de façon que celle-ci s'étende dans deux plans inclinés l'un par rapport à l'autre. Dans ce cas, bien sûr, la toile doit être adapté pour supporter l'effort appliqué par le rouleau qui peut être monté sur un axe mobile, rappelé par un ressort.

## Revendications

1. Dispositif d'occultation pour véhicule, mettant en oeuvre une toile (1) mobile entre une position repliée, dans laquelle elle est au moins en partie enroulée sur un support d'enroulement, et au moins une position déployée, **caractérisé en ce que** ledit support d'enroulement présente une section non circulaire, sa surface étant définie de façon à optimiser le volume de ladite toile (1) repliée, en fonction d'au moins une contrainte imposée par ledit véhicule.

2. Dispositif d'occultation selon la revendication 1, **caractérisé en ce que** ledit support d'enroulement comprend une bande sans fin (3) montée sur au moins deux rouleaux (4), (5) s'étendant perpendiculairement à l'axe de déploiement de ladite toile (1).

3. Dispositif d'occultation selon la revendication 2, **caractérisé en ce qu'**au moins un desdits rouleaux (4) comprend des moyens d'entraînement de ladite bande sans fin (3), et **en ce qu'**au moins un autre (5) desdits rouleaux est un rouleau fou.

4. Dispositif d'occultation selon la revendication 3, **caractérisé en ce que** lesdits moyens d'entraînement comprennent des moyens de rappel, tendant à ramener ladite toile (1) dans sa position repliée.

5. Dispositif d'occultation selon l'une quelconque des revendications 3 et 4, **caractérisé en ce que** lesdits moyens d'entraînement comprennent au moins un moteur.

6. Dispositif d'occultation selon l'une quelconque des revendications 1 à 5, **caractérisé en ce que** ladite surface définie par ledit support d'enroulement est aplatie, par rapport à un cylindre, et s'étend sensiblement parallèlement au plan défini par ladite toile (1) dans sa position déployée.

7. Dispositif d'occultation selon l'une quelconque des revendications 2 à 6, **caractérisé en ce que** ladite toile (1) est solidaire de ladite bande sans fin (3).

8. Dispositif d'occultation selon la revendication 7, **caractérisé en ce que** ladite toile (1) est solidarisée à ladite bande sans fin (3) par l'une au moins des techniques appartenant au groupe suivant :
- soudage;
- collage ;
- agrafage.

9. Dispositif d'occultation selon l'une quelconque des revendications 1 à 8, **caractérisé en ce qu'**il est destiné à occulter au moins une portion d'un pavillon vitré.

10. Dispositif d'occultation selon l'une quelconque des revendications 1 à 8, **caractérisé en ce qu'**il est destiné à occulter au moins une portion :
- d'un toit ouvrant ;
- d'une vitre de porte latérale ;
- d'une vitre de hayon ;
- d'un pare-brise ;
- d'un coffre à bagages.

11. Véhicule comprenant au moins un dispositif d'occultation mettant en oeuvre une toile mobile entre une position repliée, dans laquelle elle est au moins en partie enroulée sur un support d'enroulement, et au moins une position déployée,
**caractérisé en ce que** ledit support d'enroulement présente une section non circulaire, sa surface étant définie de façon à optimiser le volume de ladite toile repliée, en fonction d'au moins une contrainte imposée par ledit véhicule.
